**Europäisches Patentamt**

**European Patent Office**

**Office européen des brevets**

(19)

(11) Veröffentlichungsnummer: **0 350 812**
**A2**

# (12) EUROPÄISCHE PATENTANMELDUNG

(21) Anmeldenummer: **89112465.3**

(22) Anmeldetag: **07.07.89**

(51) Int. Cl.⁴: **B60K 41/08**

(30) Priorität: **15.07.88 HU 368988**

(43) Veröffentlichungstag der Anmeldung:
**17.01.90 Patentblatt 90/03**

(84) Benannte Vertragsstaaten:
**AT BE CH DE ES FR GB GR IT LI LU NL SE**

(71) Anmelder: **Madocsay, Attila, Dipl.-Ing.**
**Tárnok utca 5**
**H-1014 Budapest(HU)**

Anmelder: **Puglits, János, Dr. Dipl.-Ing.**
**Zolyomi ut 13**
**H-1118 Budapest(HU)**

Anmelder: **Toth, Pal Làszlo, Dipl.-Ing.**
**Csap u. 6**
**H-1016 Budapest(HU)**

Anmelder: **Váradi, János, Dipl.-Ing.**
**Tallér utca 8**
**H-1145 Budapest(HU)**

Anmelder: **Visy, Gyula, Dipl.-Ing.**
**Mautner S. u. 137**
**H-1131 Budapest(HU)**

(72) Erfinder: **Madocsay, Attila, Dipl.-Ing.**
**Tárnok utca 5**
**H-1014 Budapest(HU)**
Erfinder: **Puglits, János, Dr. Dipl.-Ing.**
**Zolyomi ut 13**
**H-1118 Budapest(HU)**
Erfinder: **Toth, Pal Làszlo, Dipl.-Ing.**
**Csap u. 6**
**H-1016 Budapest(HU)**
Erfinder: **Váradi, János, Dipl.-Ing.**
**Tallér utca 8**
**H-1145 Budapest(HU)**
Erfinder: **Visy, Gyula, Dipl.-Ing.**
**Mautner S. u. 137**
**H-1131 Budapest(HU)**

(74) Vertreter: **Patentanwälte Viering & Jentschura**
**Steinsdorfstrasse 6**
**D-8000 München 22(DE)**

(54) **Vorrichtung zum automatischen Schalten mehrstufiger mechanischer Gangschaltungen von Kraftfahrzeugen.**

(57) Die Erfindung betrifft eine Vorrichtung zum automatischen Schalten mehrstufiger mechanischer Gangschaltungen von Kraftfahrzeugen, insbesondere für mit einer automatisch gesteuerten Reibungskupplung ausgerüstete Fahrzeuge, die ein Gaspedal, ein Bremspedal, eine Handbremse und eine Gangschaltungsstange aufweisen. Für die Vorrichtung ist kennzeichnend, daß sie einen der Geschwindigkeit des Fahrzeuges proportionale elektrische Signale herstellenden Signalgeber (2) sowie mit dem Bremspedal (5) und dem Gaspedal (8) zusammenwirkende elektrische Schalter (6, 9, 10) aufweist, diese mit den Eingängen einer signalauswertenden schaltungsregelnden elektronischen Steuerungseinheit (3) verbunden sind, ferner die elektronische Steuerungseinheit (3) mit einer durch ihre die Schaltstange (33) fernbetäigenden Arbeitsorgane, insbesondere Arbeitszylinder, zum Einstellen der Schaltstange (33) in die entsprechenden Schaltstellungen befähigte Schalteinheit (17) in Steuerverbindung steht, die Vorrichtung ferner einen mit einem elektrischen Schalter (19) versehenen Richtungswechsel-Schalthebel (18), der in Vorwärtsgangstellung mit der Steuerungseinheit (3) verbunden ist, aufweist und schließlich die Steuerungseinheit (3) eine im Gangschaltungszustand kupplungslösende Signale gebende Ausgangssteuerleitung (67) hat.

EP 0 350 812 A2

*FIG. 1*

## Vorrichtung zum automatischen Schalten mehrstufiger mechanischer Gangschaltungen von Kraftfahrzeugen

Die Erfindung betrifft eine Vorrichtung zum automatischen Schalten mehrstufiger Gangschaltungen von Kraftfahrzeugen und ist hauptsächlich für mit einer automatisch gesteuerten Reibungskupplung ausgerüstete Fahrzeuge geeignet. Es ist bekannt, daß in der Autotechnik zwei unterschiedliche Systeme der Kraftübertragung Anwendung finden. Das eine ist die aus der Reibungskupplung und der mehrstufigen mechanischen Synchrongangschaltung aufgebaute Konstruktion, bei der der Fahrer die Kupplung mit dem Fuß betätigt und den Gang nach der Unterbrechung der Antriebskette, d. h. nach dem Durchtreten der Kupplung, mit der Hand schaltet. Die zweite Lösung ist die automatische Gangschaltung. Diese besteht aus einem hydraulischen Momentwandler und einer unter Belastung schaltbaren, meistens als Planetengetriebe ausgeführten Gangschaltung. Bei letzterer Lösung ist überhaupt kein Kupplungspedal vorhanden, die Änderung der Übersetzung wird automatisch gesteuert. Bestimmte Maßnahmen, zum Beispiel Rückwärtsgang, Motorbremse, Einparken, Leerlauf müssen vom Fahrer mit der Hand geschaltet werden.

Der Verkehr mit automatischer Gangschaltung ist im allgemeinen bequemer und sicherer, jedoch sind derartige automatische Gangschaltungen teuer, ihr Wirkungsgrad ist verhältnismäßig schlecht, weshalb sie bisher überwiegend auch nur in teuren Autos mit hoher Leistung und in Stadtautobussen eingesetzt werden.

Es sind Kostruktionen bekannt, mit denen Steuerung der Reibungskupplung automatisiert wird. Mit diesen ist das Fahren einesteils bequemer und sicherer, zum anderen wird auch der Antrieb geschont. Solche Konstruktionen sind zum Beispiel in den DE-OS 1 505 542 und 3 216 244 beschrieben. Aus dem eigenen ungarischen Patent Nr. 197 787 der Autoren vorliegender Anmeldung (entspricht der internationalen Anmeldung PCT/HU87/00054 sowie EP-PA 88900036.0) ist eine Vorrichtung bekannt, die einen an jede beliebige Reibungskupplung nachträglich montierbaren Adapter darstellt und zur automatischen Betätigung der Kupplung dient.

Diese zum automatischen Betätigen der Kupplung dienende Vorrichtung weist ein pneumatisches Arbeitsorgan, insbesondere eine Membran, ferner eine mit dieser funktionell in Verbindung stehende Steuereinheit sowie mit dem Gaspedal und dem Gangschaltungsknüppel verbundene elektrische Kontakte und einen der Motordrehzahl poportionale elektrische Signale herstellenden Signalgeber auf. Ihr Wesen besteht darin , daß sie als auch nachträglich in das Fahrzeug (ohne Veränderung seiner Konstruktionsteile und Bedienungsorgane) einbaubarer Adapter ausgeführt ist, bei dem die Steuereinheit aus miteinander in Reihe geschalteten elektropneumatischen Ventilen besteht. Von diesen ist der Einlauf des einen Ventils an eine Vakuumleitung, sein Auslauf an die pneumatische Membran angeschlossen. Ferner ist das zweite Ventil auch mit zwei Bohrungen versehen, die über je eine regelbare Drosselung mit dem äußeren Luftraum kommunizieren. Die elektrischen Kontakte des Gaspedals und des Gangschaltungsknüppels sind, miteinander in Reihe geschaltet, an die Steuereinheit angeschlossen.

Mit dieser Vorrichtung wird zwar die Betätigung der Kupplung automatisiert, d.h. es bleiben nur zwei Pedale, aber die Gänge müssen auch weiterhin mit der Hand geschaltet werden, was besonders im dichten Stadtverkehr für den Fahrer eine Belastung bedeutet.

Ziel der Erfindung war die Beseitigung dieses Mangels und die Schaffung einer Vorrichtung, mit der auch das Schalten der Gänge völlig automatisierbar ist und die ohne die Vornahme konstruktiver Veränderungen an der kraftübertragenden Konstruktion die Nerven- und Muskelarbeit des Fahrers übernimmt, dabei einfach aufgebaut ist und einen geringen Aufwand darstellt.

Gegenstand der Erfindung ist demnach eine Vorrichtung zum automatischen Schalten mehrstufiger mechanischer Gangschaltungen, d.h. Getriebe, von Kraftfahrzeugen, ihr Einbau ist vor allem in mit einer automatisch gesteuerten Reibungskupplung ausgerüstete Fahrzeuge empfehlenswert, die ein Gaspedal, ein Bremspedal, eine Handbremse und einen Gangschaltungsknüppel aufweisen. Das Wesen der Vorrichtung besteht darin, daß sie einen der Geschwindigkeit des Fahrzeuges proportionale elektrische Signal herstellenden Signalgeber sowie mit dem Bremspedal und dem Gaspedal zusammenarbeitende elektrische Schalter aufweist, diese mit den Eingängen einer signalauswertenden schaltungsregelnden elektronischen Steuerungseinheit verbunden sind, ferner die elektronische Steuerungseinheit mit einer durch ihre die Schaltstange der Gangschaltung fernbetätigenden Arbeitsorgane, insbesondere Arbeitszylinder, zum Einstellen der Schaltstange in die entsprechenden Schaltorte befähigten Schalteinheit in Steuerverbindung steht, die Vorrichtung ferner einen mit einem elektrischen Schalter versehenen Richtungswechsel-Schalthebel, der in Vorwärtsgangstellung mit der Steuerungseinheit verbunden ist, aufweist und schließlich die Steuerungseinheit eine im Gangschaltungszustand kupplungslösende Signale gebende Ausgangssteuerleitung hat.

Eine besonders vorteilhafte Lösung besteht darin, einen mit dem Griff der Handbremse in Verbindung stehenden und nur bei heruntergelassenem Handbremsengriff schließbaren elektrischen Schalter vorzusehen, der in den elektrischen Speisestromkreis der Steuerungseinheit und der Schalteinheit eingefügt ist. Auf diese Weise wird eine einfache Verriegelung erzielt.

Bevorzugt hat die Schalteinheit zum über eine Schaltgabel in axialer Richtung erfolgenden Mitnehmen der Schaltstange der Gangschaltung in die den Gängen I und III bzw. dem Leerlauf 0 bzw. den Gängen II und IV entsprechenden Stellungen befähigte Arbeitszylinder sowie einen zum über einen Wahlhebel erfolgenden Drehen der Schaltstange geeigneten Arbeitszylinder, und ferner sind die fernbetätigenden Arbeitszylinder vorteilhafterweise an eine gemeinsame Druckmediumspeiseeinheit angeschlossen.

Die erfindungsgemäße Vorrichtung ist bevorzugt als ein auch nachträglich in das Fahrzeug einbaubarer Adapter ausgebildet.

Die Erfindung wird im folgenden an Hand von Ausführungsbeispielen mit Hilfe der beigeschlossenen Zeichnung näher erläutert. In der Zeichnung zeigt:

Fig. 1 das prinzipielle Schaltbild der erfindungsgemäßen Vorrichtung,

Fig. 2 im einzelnen die Schalteinheit der Lösung gemäß Fig. 1, zum Teil im Schnitt, für die Gangschaltungsstellung 0,

Fig. 3 die Schalteinheit gemäß Fig. 2 in Schaltstellung,

Fig. 4 den Schnitt IV-IV gemäß Fig. 2,

Fig. 5 den Schnitt V-V gemäß Fig. 2 und

Fig. 6 schematisch das Zusammenwirken der erfindungsgemäßen Vorrichtung mit dem bekannten, die Kupplung betätigenden Adapter.

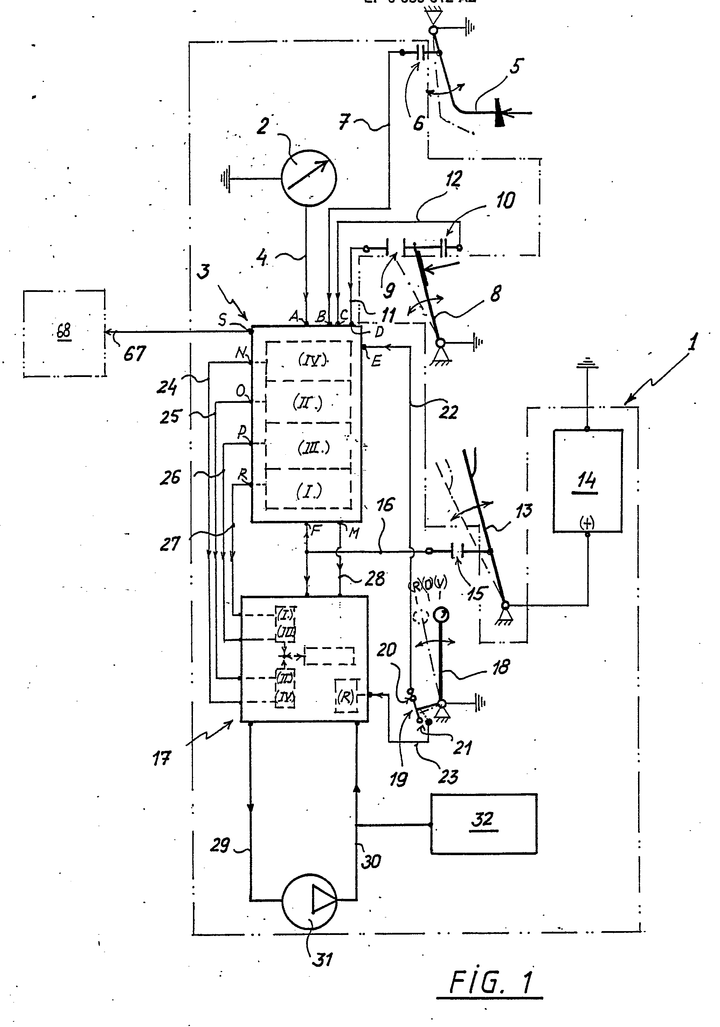

In Fig. 1 ist als Beispiel die erfindungsgemäße Vorrichtung 1 für einen Personenkraftwagen des Typs "Renault 12" gezeigt. Dieser Wagen hat im Originalzustand ein von Hand zu schaltendes, einfaches, synchronisiertes Zahnradgetriebe (in der Zeichnung nicht dargestellt) mit vier Vorwärtsgängen und einem Rückwärtsgang, zu dessen Automatisierung die als Adapter ausgebildete Vorrichtung 1 herangezogen wird.

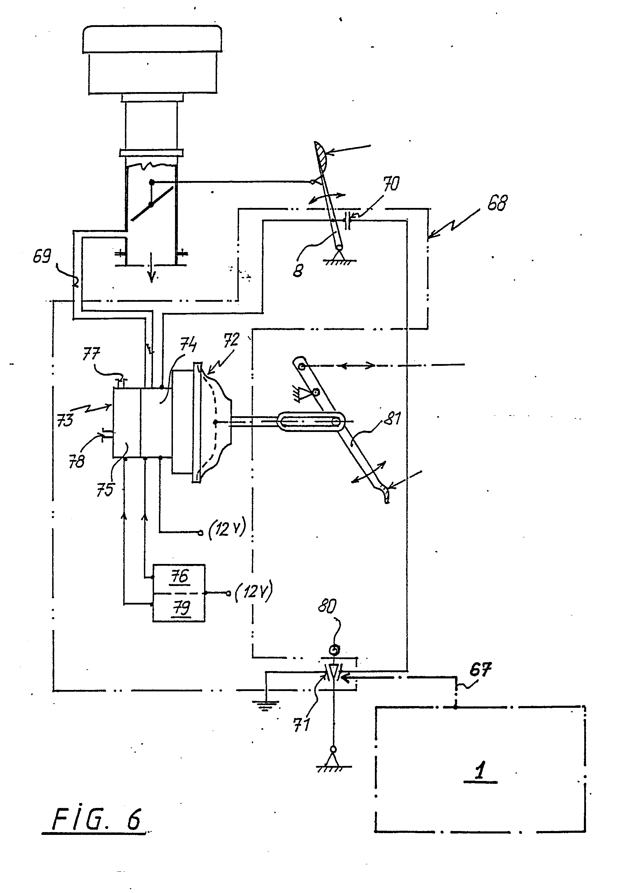

Es sei bemerkt, daß die automatische Betätigung der Reibungskupplung des Fahrzeuges durch einen elektropneumatischen Adapter gemäß der ungarischen Patentschrift Nr. 197 787 erfolgt, auf den in Zusammenhang mit Fig. 6 noch näher eingegangen wird.

Die erfindungsgemäße Vorrichtung 1 hat einen Signalgeber 2, der über eine Leitung 4 ein der Fahrgeschwindigkeit des Fahrzeuges proportionales elektrisches Signal an eine signalauswertende schaltungsregelnde elektronische Steuerungseinheit 3 liefert. Der Signalgeber 2 ist im vorliegenden Fall ein an sich bekannter Generator.

Mit der Steuerungseinheit 3 steht über eine Leitung 7 ein mit dem Bremspedal 5 verbundener elektrischer Schalter 6 in Verbindung. Der Schalter 6 ist bei heruntergedrücktem Bremspedal 5 in geschlossenem Zustand und schaltet dadurch die Steuerungseinheit 3 zwecks Vermeidung überflüssiger Schaltvorgänge aus (die Gangschaltung bleibt in dem Gang, in dem sie gerade ist).

Über Leitungen 11 beziehungsweise 12 sind mit dem Gaspedal 8 zusammenarbeitende elektrische Schalter 9 und 10 mit der Steuerungseinheit 3 verbunden. In Fig. 1 ist das Gaspedal 8 im nicht heruntergedrücktem Zustand, wobei der Schalter 10 geschlossen, der Schalter 9 hingegen offen ist. Bei voll durchgetretenem Gaspedal ist die Stellung der Schalter umgekehrt.

Gemäß Fig. 1 ist der Handbremsengriff 13 des Fahrzeuges mit dem positiven Pol einer Stromquelle 14 (zum Beispiel eines Akkumulators) verbunden und arbeitet andererseits mit einem Schalter 15 zusammen, der über eine als elektrische Speiseleitung dienende Leitung 16 auch mit der Steuerungseinheit 3 und der Schalteinheit 17 verbunden ist. Wenn der Handbremsengriff 13 heruntergelassen ist (in Fig. 1 durch eine dünne Strich-Punkt-Linie angedeutet), ist der Schalter 15 geschlossen, und die Steuerungseinheit 3 sowie die Schalteinheit 17 erhalten Speisespannung.

Die Vorrichtung 1 hat einen Gangwahlhebel 18, der in die Stellungen Vorwärts (V), Leer (0) und Rückwärts (R) geschaltet werden kann. Der Gangwahlhebel 18 steht in funktioneller Verbindung mit einem Schalter 19; in der in Fig. 1 gezeigten Stellung des Gangwahlhebels 18 ist das Kontaktpaar 20 für den Vorwärtsgang geschossen, das dem Rückwärtsgang dienende Kontaktpaar 21 des Gangwahlhebels 18 wird geschlossen, wenn dieser in die Stellung R geschaltet wird. Das Kontaktpaar 20 ist über eine Leitung 22 mit der Steuerungseinheit 3, das Kontaktpaar 21 über eine Leitung 23 mit der Schalteinheit 17 verbunden.

Die im beschriebenen Fall hydraulisch arbeitende Schalteinheit 17 hat die Aufgabe, mittels ihrer fernbetätigenden Arbeitsorgane die Schaltstange der Gangschaltung in die entsprechenden Schaltstellungen zu bringen. Die Schalteinheit 17 steht über Steuerleitungen 24-28 mit der Steuerungseinheit 3 in Steuerverbindung. Die Einzelheiten der Schalteinheit 17 werden später erläutert, hier sei nur so viel erwähnt, daß ihr hydraulischer Kreis im vorliegenden Fall aus Leitungen 29 und 30, einer zwischen diese eingebauten Pumpe 31 und einem an die Druckleitung 30 angeschlossenen Druckbehälter 32 besteht.

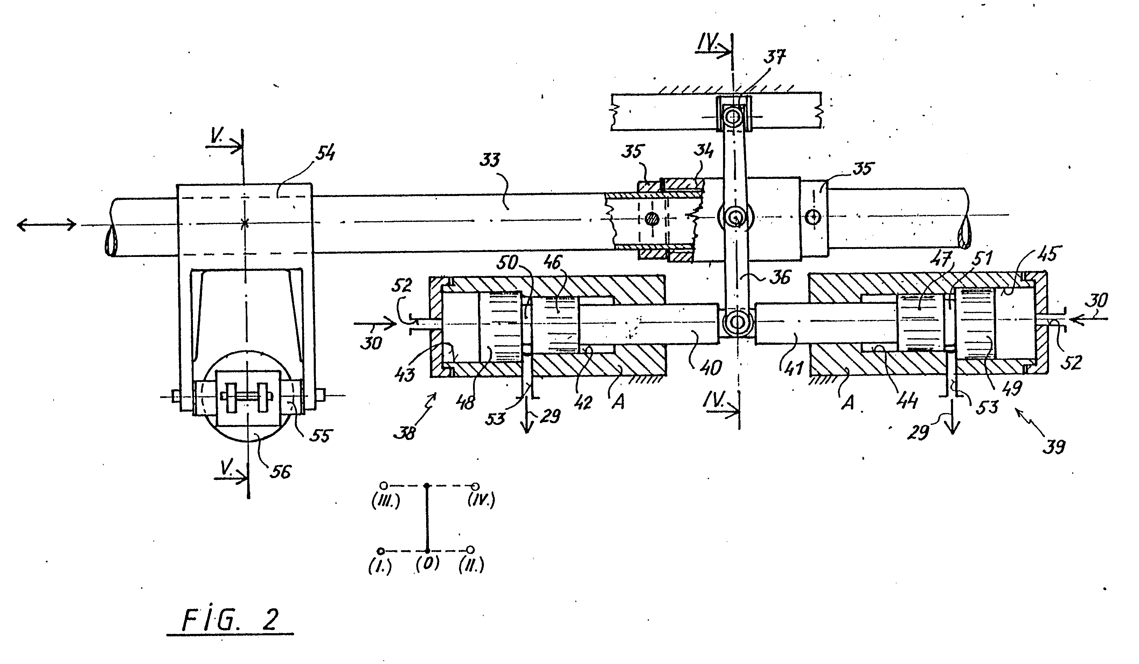

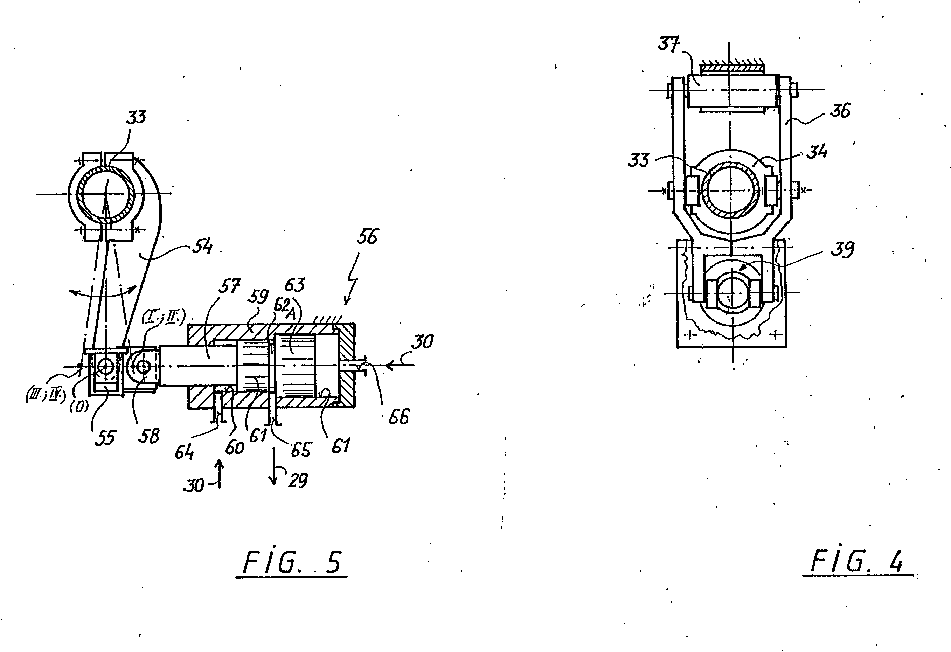

Die Schalteinheit 17 ist in den Fig. 2-5 ausführlicher gezeigt. In Fig. 2 ist die Schaltstange der Gangschaltung mit 33 bezeichnet; auf ihr ist drehbar eine Schiebehülse 34 mit zwei Schieberingen 35 befestigt. An die Schiebehülse 34 ist eine Schaltgabel 36 angelenkt, deren oberes Ende mit einer ortsfest gestützten Kulisse 37, ihr unteres Ende jedoch gelenkig mit den Enden der Kolbenstangen 40 beziehungsweise 41 von parallel zur Schaltstange 33 koaxial und spiegelbildartig angeordneten Arbeitszylindern 38 und 39 verbunden ist (Fig. 2 und 4).

Die Zylinder A der hydraulischen Arbeitszylinder 38, 39 weisen eine stufenartige Bohrung auf (mit 42, 43 bzw. 44, 45 bezeichnet). In den Bohrungen 42 beziehungsweise 44 sind die an der Kolbenstange 40 beziehungsweise 41 befestigten Kolben 46 beziehungsweise 47, in den Bohrungen 43 beziehungsweise 45 die einen größeren Duchmesser aufweisenden Kolben 48 beziehungsweise 49 verschiebbar angeordnet. Die Kolben 46 und 47 haben auf ihrer den Kolben 48 beziehungsweise 49 zugewandten Seite eine Nase 50 beziehungsweise 51 verringerten Durchmessers. Die Anschlußstutzen der Zylinder A sind einheitlich mit 52 beziehungsweise 53 bezeichnet; von diesen sind in der in Fig. 2 gezeigten Schaltstellung 0 die Anschlußstutzen 52 die Einläufe (s. auch das Schaltschema), die mit der Druckleitung 30 in Verbindung stehen, die Anschlußstutzen 53 sind in dieser Stellung hingegen Ausläufe, die mit der Rückkehrleitung 29 verbunden sind.

(An dieser Stelle sei erwähnt, daß das Schalten der Anschlußstutzen 52 und 53 an die Leitungen 29 beziehungsweise 30 durch hier nicht dargestellte elektromagnetische Wegeventile erfolgt, die mit den Steuerleitungen der Steuerungseinheit 3 in Verbindung stehen.)

Auf der Linken Seite der Fig. 2 ist zu sehen, daß auf der mit der Schaltgabel 36 in axialer Richtung verschiebbaren Schaltstange 33 ein mit dieser zusammen drehbarer Wahlhebel 54 befestigt ist. In den Wahlgebel 54 ist eine Kulisse 55 eingebettet, an die ein wählender Arbeitszylinder 54 angelenkt ist (Fig. 5). Mit dem Arbeitszylinder 56 ist demnach die Schaltstange 33 in die den Gängen I, II oder III beziehungsweise IV entsprechenden Stellungen drehbar. In Fig. 5 ist der Arbeitszylinder 56 in neutraler mittlerer Stellung, aus der er zur Schaltung der entsprechenden Gangpaare nach rechts beziehungsweise nach links wegbewegt werden kann. Der Zylinder 59 des Arbeitszylinders 56 hat eine stufenartige Bohrung 60 beziehungsweise 61. In der Bohrung 60 ist ein an einer Kolbenstange 57 besfestigter Kolben 62, in der weiteren Bohrung 61 ein Kolben 63 axial verschiebbar angeordnet. Der Kolben 63 stützt sich auf der einen verringerten Durchmesser aufweisenden Nase 62A des Kolbens 62 ab. Der Zylinder 59 verfügt über Anschlußstutzen 64-66, von denen in der in Fig. 5 gezeigten Stellung 0 die Anschlußstutzen 64 und 66 an die Druckleitung 30, der Anschlußstutzen 65 an die Rückkehrleitung 29 angeschlossen sind (über nicht dargestellte elektromagnetische Wegeventile).

Hier sei bemerkt, daß die Arbeitszylinder 38 und 39 einfach wirkende Arbeitszylinder sind, die immer nur auf Druck ansprechen. Ihre stufenartige Ausführung hat den Vorteil, daß eine genaue Hubabgrenzung eingehalten werden kann.

Wie aus den Fig. ersichtlich, sind die Eingänge der elektronischen Steuerungseinheit 3 mit A, B, C, D, E und F, ihre Ausgänge mit M, N, O, P, R und S gekennzeichnet. Die Steuerungseinheit 3 besteht aus an sich bekannten Relais beziehungsweise elektronischen Schaltungen, auf deren Einzelheiten hier nicht eingegangen werden soll, weil sie in Kenntnis der Erfindung für den Fachmann offensichtlich sind. Die Steuerungseinheit 3 hat eine Ausgangssteuerleitung 67, die bei jedem einzelnen Gangschaltungsvorgang dem die Kupplung betätigenden bekannten Adapter 68 ein elektrisches Steuersignal zum Trennen der Kupplung gibt.

In den Fig. sind nur die zum Verständnis der Funktion erforderlichen Teile des bekannten Adapters 68 dargestellt. Das mit dem Ansaugrohr des Motors verbundene Vakuumrohr ist mit 69, der mit dem Gaspedal 8 in funktioneller Verbindung stehende Schalter mit 70, der mit dem Gangschaltungsknüppel in funktioneller Verbindung stehende elektrische Schalter 71 und die das Kupplungspedal bewegende pneumatische Membran mit 72 bezeichnet. Die Membran 72 ist funktionell mit einer Steuereinheit 73 verbunden, die aus miteinander in Reihe geschalteten elektro-pneumatischen Ventilen 74 und 75 besteht. Das Ventil ist mit einem der Drehzahl proportionale elektrische Signal gebenden Signalgeber 76 sowie mit den in Reihe geschalteten Schaltern 70 und 71 elektrisch verbunden. Das Ventil 75 kommuniziert über regelbare Drosselungen 77 und 78 mit der Außenatmosphäre und ist ferner mit einem weiteren, der Drehzahl proportionale Signale gebenden Signalgeber verbunden.

Der die Kupplung betätigende Adapter 68 löst die Kupplungsverbindung nur, wenn das Gaspedal losgelassen und der Schalter 71 geschlossen ist.

Die erfindungsgemäße Vorrichtung arbeitet folgendermaßen. Zur Vorwärtsfahrt stellt der Fahrer den Gangwahlhebel in die Stellung V, wodurch das Kontaktpaar 20 schließt. Der Handbremsengriff 13 wird heruntergelassen, dadurch der Schalter 15 geschlossen und die elektronische Steuerungseinheit 2 sowie die Schalteinheit 17 unter Spannung gesetzt. Die Steuerungseinheit 3 realisiert die Vorwärtsgänge I-IV durch entsprechende Steuerung der Schalteinheit 17 in Abhängigkeit vom Steuersignal des Signalgebers 2.

Die Funktion der Steuerungseinheit 3 wird demnach von dem Signalgeber 2 und ferner von den Schaltern 9 beziehungsweise 10 des Gaspedals 8 gesteuert. Wenn der Schalter 6 des Bremspedals 5 schließt, ist die Steuerungseinheit 3 abgeschaltet.

Die elektronische Steuerungseinheit 3 orientiert sich an den unteren und oberen Grenzwerten der zu dem jeweiligen Gang gehörigen Geschwindigkeit. In dem als Beispiel dienenden Fall wurden die Grenzwerte wie folgt gewählt: I. Gang 0-25 km/h, II.Gang 18-40 km/h, III. Gang 30-75 km/h, IV. Gang 55-110 km/h. Eine Schaltung kann dann erfolgen, wenn der Fahrer das Gaspedal 8 losläßt, wonach auf das Signal der Steuerungseinheit 3 hin die Schalteinheit 17 um einen Gang hochschaltet. Natürlich ist die Beschleunigung völlig dem Fahrer überlassen, dessen Absichten die Steuerungseinheit 3 nicht kritisieren kann.

Das Herunterschalten erfolgt im allgemeinen dann, wenn die Geschwindigkeit des Fahrzeuges unter den unteren Grenzwert des eingeschalteten Ganges sinkt und der Signalgeber 2 ein dem entsprechendes Signal gibt und der Fahrer das Gaspedal 8 losläßt. Ein Herunterschalten kann jedoch auch erforderlich sein, um eine bessere Beschleunigung zu erzielen oder die Motorbremse wirken zu lassen. Dies kann durch völliges Herunterdrücken und anschließendes Loslassen des Gaspedals 8 erreicht werden, denn dadurch wird zuerst der Schalter 9 und dann der Schalter 10 geschlossen, und die Steuerungseinheit 3 steuert die Schalteinheit 17 im Sinne der Herunterschaltens.

Um anhaltend mit dem Motor bremsen zu können (zum Beispiel auf langen Bergabfahrten), kann der Fahrer die Steuerungseinheit 3 ausschalten, zum Beispiel indem er den Gangwahlhebel 18 in die neutrale Stellung 0 schiebt.

Für den Rückwärtsgang muß der Gangwahlhebel 18 in die Stellung R bewegt werden, wodurch das Kontaktpaar 21 geschlossen wird und die Schalteinheit 17 unmittelbar den Rückwärtsgang schaltet.

Die dargestellte Variante der hydraulischen Schalteinheit 17 wird von der Steuerungseinheit 3 wie folgt betätigt.

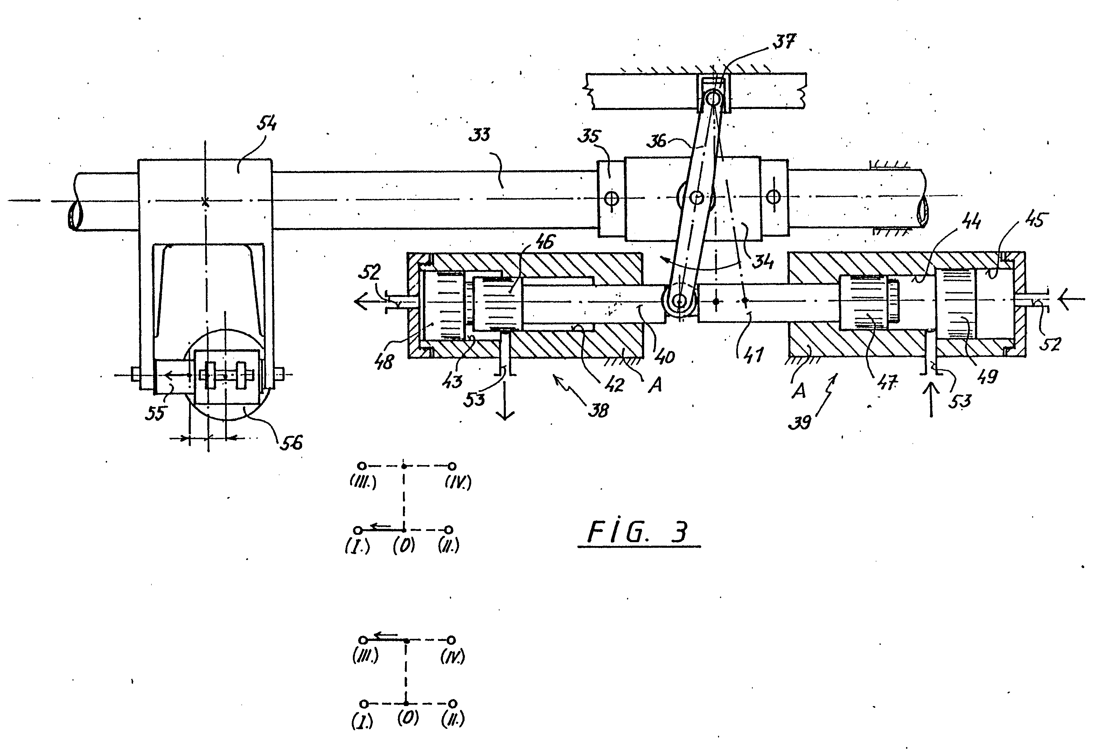

Um vom I. in den II. Gang zu schalten, muß die Schaltstange 33 von ihrer in Fig. 3 gezeigten einen äußersten Stellung in die dem II. Gang ensprechende andere äußerste Stellung gebracht werden. Dazu wird die Druckleitung 30 auf die Anschlußstutzen 52 und 53 des Arbeitszylinders 38 geschaltet, während die Anschlußstutzen 52 und 53 des Arbeitszylinders 39 mit der Rückkehrleitung 29 verbunden werden. Dadurch bewegen sich die Kolbenstangen 40 und 41 in ihre in Fig. 3 auf der rechten Seite liegende Endstellung, wobei sie die Schaltstange 33 über die Schaltgabel 36 ebenfalls nach rechts, in die dem II. Gang entsprechende Stellung mitnehmen.

Zum weiteren Hochschalten werden die Arbeitszylinder 38 und 39 zunächst in die in Fig. 2 gezeigte neutrale Stellung 0 gebracht, dann werden die Anschlußstutzen 65 und 66 des wählenden Arbeitszylinders 56 mit Öl aus der Druckleitung 30 beaufschlagt. Dadurch wird die Schaltstange 33 über den Wahlhebel 54 in die dem III. und IV. Gang entsprechende linksseitige äußerste Stellung (Fig. 5) gedreht. Dann wird von der Automatik durch die in Fig. 3 gezeigte Steuerung der Arbeitszylinder 38 und 39 der III. Gang geschaltet, die Schaltung des IV. Ganges erfolgt durch eine dem entgegengesetzte Steuerung. Der wählende Arbeitszylinder 56 ist demnach doppeltwirkend.

Die erfindungsgemäße Vorrichtung 1 zum automatischen Schalten der Gänge nimmt also nach der Wahl der Fahrtrichtung - in Kombination mit dem bekannten, die Kupplung betätigenden Adapter 68 - die Betätigung der Kraftübertragung völlig automatisch vor. Es wurde schon darauf hingewiesen, daß die Steuerungseinheit 3 über die Steuerleitung 67 dem Schalter 71 des Adapters 68 immer dann ein Steuersignal zuleitet (worunter das Schließen des Schalters 71d zu verstehen ist), wenn ein Gangschaltungsvorgang erfolgt. Damit kann die Synchronisierung von Gangschaltung und Kupplungsbetätigung einfach gelöst werden. Der Fahrer kann in der gewohnten Weise mit dem Gaspedal 8 und dem Bremspedal 5 die Schaltung der Gänge im Rahmen des möglichen nach Belieben steuern, ohne daß die elektronische Steuerungseinheit 3 in die Absichten des Fahrers einzugreifen vermag.

Die erfindungsgemäße Vorrichtung 1 kann als ergänzende Konstruktion herkömmlicher Synchrongangschaltungen, d.h. als Adapter in beliebige Fahrzeuge eingebaut werden, zum Beispiel in Personenkraftwagen, Autobusse oder städtische Nutzfahrzeuge. Die Kraftübertragungskonstruktion und die Bedienungselemente des Fahrzeuges brauchen dazu nicht geändert zu werden. Die Vorrichtung ist verhältnismäßig einfach in der Konstruktion und bietet in der Form des nachträglich einbaubaren Adapters eine wirtschafliche Lösung für die Entlastung des Fahrers und einen sichereren Verkehr.

Schließlich sei erwähnt, daß die Schalteinheit 17 nicht unbedingt hydraulisch arbeiten muß, sie kann auch pneumatisch arbeiten. Vorstellbar ist sogar eine Ausführung, bei der die die Einstellvorgänge vornehmenden Arbeitsorgane keine Arbeitszylinder, sondern Elektromagnete sind.

**Ansprüche**

1. Vorrichtung zum automatischen Schalten mehrstufiger mechanischer Gangschaltungen von Kraftfahrzeugen, insbesondere für mit einer automatisch gesteuerten Reibungskupplung ausgerüstete Fahrzeuge, die ein Gaspedal, ein Bremspedal, eine Handbremse und eine Gangschaltungsstange aufweisen, dadurch gekennzeichnet, daß sie einen der Geschwindigkeit des Fahrzeuges proportionale elektrische Signale herstellenden Signalgeber (2) sowie mit dem Bremspedal (5) und dem Gaspedal (8) zusammenarbeitende elektrische Schalter (6,9,10) aufweist, diese mit den Eingängen einer signalauswertenden schaltungsregelnden elektronischen Steuerungseinheit (3) verbunden sind, ferner die elektronische Steuerungseinheit (3) mit einer durch ihre die Schaltstange (33) der Gangschaltung fernbetätigenden Arbeitsorgane, insbesondere Arbeitszylinder, zum Einstellen der Schaltstange (33) in die entsprechenden Schaltstellungen befähigten Schalteinheit (17) in Steuerverbindung steht, die Vorrichtung ferner einen mit einem elektrischen Schalter (19) versehenden Richtungswechsel-Schalthebel (18), der in Vorwärtsgangstellung mit der Steuerungseinheit (3) verbunden ist, aufweist und schließlich die Steuerungseinheit (3) eine im Gangschaltungszustand kupplungslösende Signale gebende Ausgangssteuerleitung (67) hat.

2. Vorrichtung nach Anspruch 1, dadurch gekennzeichnet, daß ein mit dem Handbremsengriff (13) in Verbindung stehender und nur bei heruntergelassenem Handbremsengriff (13) schließbarer Schalter (15) vorgesehen ist, der in den elektrischen Speisestromkreis der Steuerungseinheit (3) und der Schalteinheit (17) eingefügt ist.

3. Vorrichtung nach Anspruch 1 oder 2, dadurch gekennzeichnet, daß die Schalteinheit (17) zum über eine Schaltgabel (36) in axialer Richtung erfolgenden Mitnehmen der Schaltstange (33) in den Gängen I und III bzw. dem Leerzustand 0 bzw. den Gängen II und IV entsprechenden Stellungen befähigte Arbeitszylinder (38, 39) sowie einen zum über einen Wahlhebel (54) erfolgenden Drehen der Schaltstange (33) geeigneten Arbeitszylinder (56) aufweist und die fernbetätigenden Arbeitszylinder (38, 39, 56) an eine gemeinsame Druckmediumspeiseeinheit angeschlossen sind.

4. Vorrichtung nach einem der Ansprüche 1-3, dadurch gekennzeichnet, daß sie in Form eines unter Beibehaltung der ursprünglichen Kraftübertragungskonsturktion und der Bedienungselemente des Kraftfahrzeuges zum nachträglichen Einbau geeigneten Adapters ausgeführt ist.

**FIG. 1**

FIG. 2

*FIG. 3*

FIG. 4

FIG. 5

_FIG. 6_